(19) Europäisches Patentamt
European Patent Office
Office européen des brevets

(11) **EP 2 864 620 B1**

(12) **FASCICULE DE BREVET EUROPEEN**

(45) Date de publication et mention
de la délivrance du brevet:
**28.12.2016 Bulletin 2016/52**

(21) Numéro de dépôt: **13737314.8**

(22) Date de dépôt: **14.06.2013**

(51) Int Cl.:
*F02K 9/48* *(2006.01)*    *F02K 9/56* *(2006.01)*
*F02K 9/64* *(2006.01)*

(86) Numéro de dépôt international:
**PCT/FR2013/051394**

(87) Numéro de publication internationale:
**WO 2014/001686 (03.01.2014 Gazette 2014/01)**

(54) **TURBOPOMPE**

TURBOPUMPE

TURBOPUMP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2012 FR 1255981**

(43) Date de publication de la demande:
**29.04.2015 Bulletin 2015/18**

(73) Titulaire: **SNECMA**
**75015 Paris (FR)**

(72) Inventeurs:
• **LE BOUAR, Gaelle**
  **F-27950 Saint-Marcel (FR)**
• **PETIT, Richard**
  **F-76000 Rouen (FR)**

(74) Mandataire: **Calvo de Nó, Rodrigo et al**
**Cabinet Beau de Loménie**
**158, rue de l'Université**
**75340 Paris Cedex 07 (FR)**

(56) Documents cités:
**EP-A2- 2 103 799    FR-A1- 2 699 602**
**FR-A1- 2 815 673    US-A- 3 077 073**
**US-A- 3 613 375    US-A- 4 879 874**
**US-A- 4 912 925**

• **James R Brown ET AL: "DESIGN AND ANALYSIS REPORT FOR THE RL10-11B BREADBOARD LOW THRUST ENGINE", West Palm Beach , Florida 33402, USA, 12 décembre 1984 (1984-12-12), pages 1-C20, XP055056697, West Palm Beach , Florida 33402, USA Extrait de l'Internet: URL:http://ntrs.nasa.gov/archive/nasa/casi .ntrs .nasa.gov/19850010710_1985010710.pdf [extrait le 2013-03-15] cité dans la demande**

EP 2 864 620 B1

**Description**

Arrière-plan de l'invention

La présente invention concerne le domaine de l'alimentation d'au moins une chambre de combustion en au moins un ergol. Dans la description qui suit les termes "amont" et "aval" sont définis par rapport au sens de circulation normal d'un ergol dans un circuit d'alimentation.

Dans les moteurs à réaction, et plus particulièrement dans les moteurs-fusées, la poussée est typiquement générée par l'expansion dans une tuyère propulsive de gaz de combustion chauds produits par une réaction chimique exothermique au sein d'une chambre de combustion. En conséquence, des hautes pressions règnent normalement dans cette chambre de combustion pendant son fonctionnement. Afin de pouvoir continuer à alimenter la chambre de combustion malgré ces hautes pressions, les ergols doivent être introduits à des pressions encore plus élevées. Pour cela, des différents moyens sont connus dans l'état de la technique.

Un premier moyen qui a été proposé est la pressurisation des réservoirs contenant les ergols. Toutefois, cette approche restreint fortement la pression maximale pouvant être atteinte dans la chambre de combustion, et donc l'impulsion spécifique du moteur à réaction. En conséquence, pour atteindre des impulsions spécifiques plus élevées, l'utilisation de pompes d'alimentation est devenue courante. Des différents moyens ont été proposés pour actionner ces pompes, dont le plus courant est leur entraînement par au moins une turbine. Dans une telle turbopompe, la turbine, à son tour, peut être actionnée de plusieurs manières différentes. Par exemple, la turbine peut être actionnée par des gaz de combustion produits par un générateur de gaz. Toutefois, dans les moteurs-fusées dits à cycle à expandeur, la turbine est actionnée par l'un des ergols après son passage par un échangeur de chaleur dans lequel il a été chauffé par de la chaleur produite dans la chambre de combustion. Ainsi, ce transfert de chaleur peut contribuer simultanément à refroidir les parois de la chambre de combustion et/ou de la tuyère propulsive et à actionner l'au moins une pompe d'alimentation.

Typiquement, les circuits d'alimentation en ergols sont paramétrés pour arriver à un équilibre de fonctionnement dans lequel un débit spécifique de chaque ergol est fourni à la chambre de combustion. En conséquence, un moteur-fusée alimenté par des tels circuits d'alimentation arrive à un niveau de poussée stable. Toutefois, dans certaines circonstances, il peut être souhaitable d'avoir le choix entre plusieurs niveaux de poussée stables. En particulier, on souhaite désormais que les moteurs-fusées des derniers étages d'engins lanceurs de satellites aient, à part une fonction de mise en orbite de la charge utile, une fonction de désorbitation du dernier étage. Or, pour cette désorbitation, et notamment afin d'assurer la précision du point de chute de ce dernier étage, il est préférable d'avoir un niveau de poussée sensiblement plus réduit que lors de la mise en orbite de la charge utile.

Dans l'étude « Design and Analysis Report for the RL 10-IIB Breadboard Low Thrust Engine », FR-18046-3, rédigée pour la NASA le 12 décembre 1984, un procédé d'alimentation en ergols d'une chambre de combustion a été proposé, pouvant obtenir un mode à poussée réduite en ouvrant un passage de contournement de la turbine d'entraînement des pompes des deux ergols. Toutefois, cette solution exige une complication supplémentaire des circuits d'alimentation en ergols, en détriment notamment de leur fiabilité.

La demande de brevet FR2815673 divulgue également un procédé d'alimentation d'une chambre de combustion en ergol selon l'état de l'art avec un pompage d'un débit principal et d'un débit secondaire de l'ergol par une pompe, le chauffage du débit principal de l'ergol dans un échangeur de chaleur en aval de la pompe, la détente du débit principal de l'ergol, après ledit chauffage, dans une turbine actionnant la pompe, l'injection du débit principal de l'ergol, en aval de la turbine dans une chambre de combustion, et l'injection du débit secondaire directement dans la chambre de combustion de façon à ce qu'il ne participe pas à l'entraînement de la turbine, permettant ainsi de piloter le ratio entre la puissance générée par la turbine et la puissance consommée par la pompe et ainsi arrêter une montée en régime de la turbine et de la pompe à un régime prédéterminé inférieur à un régime nominal.

Objet et résumé de l'invention

La présente invention vise à remédier à ces inconvénients. Notamment, l'invention vise à proposer un procédé d'alimentation d'au moins une chambre de combustion en au moins un premier ergol, dans lequel ledit premier ergol est pompé par une première pompe, chauffé ensuite dans un échangeur de chaleur en aval de ladite première pompe, et détendu, après ledit chauffage, dans une première turbine actionnant la première pompe, avant d'être injecté, en aval de ladite première turbine, dans l'au moins une chambre de combustion, et qui permette d'arrêter une montée en régime desdites première turbine et première pompe à un régime inférieur à un régime nominal, et ceci sans entraîner une complication supplémentaire des circuits d'alimentation en ergols.

Dans au moins un mode de réalisation, ce but est atteint grâce au délestage d'un débit secondaire du premier ergol en aval de la première pompe, mais en amont de la première turbine, ledit délestage étant piloté de manière à atteindre un équilibre entre une puissance générée par la première turbine et une puissance consommée par la première pompe pour arrêter la montée en régime. Ce débit secondaire est pompé par la première pompe ensemble avec le débit principal injecté dans l'au moins une chambre de combustion.

Grâce à ce délestage, en réduisant le rapport entre le débit impulsant la première turbine et le débit pompé par la première pompe, il est possible d'arrêter la montée en régime de la première pompe afin de restreindre un débit principal du premier ergol fourni à la chambre de combustion. La poussée générée par un moteur-fusée dont l'au moins une chambre de combustion est alimentée de cette manière peut ainsi être stabilisée à un niveau de poussée restreint, sensiblement plus bas qu'un niveau de poussée nominal pouvant être atteint sans délestage.

En particulier, le délestage peut s'effectuer entre la première pompe et l'échangeur de chaleur, notamment, mais pas nécessairement, à travers une vanne de purge du premier ergol. Toutefois, il peut aussi s'effectuer entre l'échangeur de chaleur et la première turbine.

L'échangeur de chaleur peut notamment être un échangeur de chaleur du type dit régénératif, c'est-à-dire chauffant le premier ergol avec une chaleur générée dans ladite chambre de combustion. Ainsi le circuit d'alimentation est un circuit du type dit à expandeur, utilisant ce transfert de chaleur vers le premier ergol simultanément pour refroidir des parois de la chambre de combustion et/ou de la tuyère propulsive et pour actionner au moins la première turbine. Afin de mieux piloter le régime de la première turbine, au moins une partie du débit principal du premier ergol peut contourner au moins la première turbine à travers un premier passage de contournement, équipé d'une première vanne de contournement. En particulier, la deuxième turbine peut être située en aval de la première turbine.

Afin d'assurer l'alimentation de la chambre de combustion en un deuxième ergol, le procédé d'alimentation peut comprendre en outre le pompage d'un débit d'un deuxième ergol par une deuxième pompe et l'injection d'au moins une partie de ce débit du deuxième ergol dans l'au moins une chambre de combustion. En particulier, pour actionner cette deuxième pompe, le procédé peut comprendre en outre la détente d'au moins une partie du débit principal du premier ergol dans une deuxième turbine actionnant la deuxième pompe. Cette deuxième turbine peut notamment être située en aval de la première turbine. Afin de mieux piloter le régime de la deuxième turbine, au moins une partie du débit principal du premier ergol peut contourner au moins la deuxième turbine à travers un deuxième passage de contournement, équipé d'une deuxième vanne de contournement.

Brève description des dessins

L'invention sera bien comprise et ses avantages apparaîtront mieux, à la lecture de la description détaillée qui suit, de trois modes de réalisation représentés à titre d'exemples non limitatifs. La description se réfère aux figures annexées, dont :

la figure 1 représente schématiquement un moteur-fusée avec un système d'alimentation en ergols alimentant la chambre de combustion du moteur-fusée avec un procédé suivant un premier mode de réalisation de la présente invention ;
la figure 2 représente schématiquement un moteur-fusée avec un système d'alimentation en ergols alimentant la chambre de combustion du moteur-fusée avec un procédé suivant un deuxième mode de réalisation de la présente invention ; et
la figure 3 représente schématiquement un moteur-fusée avec un système d'alimentation en ergols alimentant la chambre de combustion du moteur-fusée avec un procédé suivant un premier mode de réalisation de la présente invention.

Description détaillée de l'invention

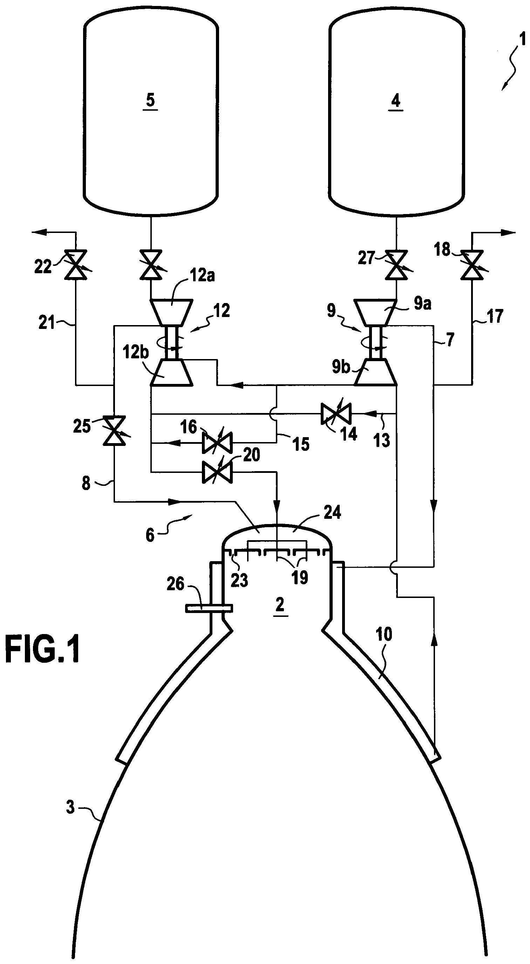

Le moteur-fusée 1 illustré sur la figure 1 comporte une chambre de combustion 2 avec une tuyère divergente 3, des réservoirs 4,5, et un système 6 d'alimentation de la chambre de combustion 2 en ergols provenant des réservoirs 4, 5. Le réservoir 4 contient un premier ergol et le réservoir 5 un deuxième ergol. En particulier, dans le mode de réalisation illustré, les réservoirs 4, 5 peuvent être des réservoirs cryogéniques, contenant, respectivement, de l'hydrogène et de l'oxygène liquides.

Le système d'alimentation 6 comprend un premier circuit 7 pour le premier ergol et un deuxième circuit 8 pour le deuxième ergol. Le premier circuit 7 est connecté au réservoir 4 à travers une vanne 27 et comporte une première turbopompe 9 et un échangeur de chaleur 10 régénératif intégré dans les parois de la chambre de combustion 2. La première turbopompe 9 comprend une première pompe 9a et une première turbine 9b couplée à la première pompe 9a afin de l'actionner. Le premier circuit 7 est configuré de telle manière que l'échangeur de chaleur 10 est situé en aval de la première pompe 9a et en amont de la première turbine 9b. Une deuxième turbine 12b est encore située en aval de la première turbine 9b dans ce premier circuit 7. Cette deuxième turbine 12b est couplée à une deuxième pompe 12a afin de l'actionner, ladite deuxième pompe 12a étant située dans le deuxième circuit 8 pour pomper le deuxième ergol. Ensemble, la deuxième pompe 12a et la deuxième turbine 12b forment une deuxième turbopompe 12. Le premier circuit 7 comporte en outre un passage 13 de contournement des deux turbines 9b, 12b, équipé d'une première vanne de contournement 14, et un passage 15 de contournement de la deuxième turbine 12b, équipé d'une deuxième vanne de contournement 16. Le premier circuit 7 comporte aussi, directement en aval de la première pompe 9a, une dérivation vers une ligne 17 de purge du premier ergol, avec une vanne 18 de purge du premier ergol. Directement en amont des injecteurs 19 d'injection du premier ergol dans la chambre de combustion 2, le premier circuit 7 comporte aussi une vanne 20 d'entrée du premier ergol dans la chambre de combustion 2.

Le deuxième circuit 8, connecté au réservoir 5 à travers une vanne 28, comporte aussi, en aval de la deuxième pompe 12a, une dérivation vers une ligne 21 de purge du deuxième ergol, avec une vanne 22 de purge du deuxième ergol. Le deuxième circuit 8 débouche dans les injecteurs 23 d'injection du deuxième ergol dans la chambre de combustion 2 à travers un dôme 24 couronnant la chambre de combustion 2. Directement en amont de ce dôme 24, le deuxième circuit 8 comporte aussi une vanne 25 d'entrée du deuxième ergol dans la chambre de combustion 2. La chambre de combustion 2 comporte aussi un allumeur 26. Les vannes 14,16,18,20,22,25,27 et 28, et l'allumeur 26 sont tous connectés à une unité de commande (non illustrée) afin de réguler le fonctionnement du moteur-fusée 1.

En fonctionnement, avant l'allumage du moteur-fusée 1, les vannes 27 et 28 sont ouvertes d'abord pour permettre l'entrée des ergols dans les circuits 7, 8 et la mise à froid de ces circuits. Pendant cette mise à froid, les vannes de purge 18, 22 restent ouvertes, ainsi que les vannes de contournement 14, 16. Une fois que les circuits 7, 8 sont mis à froid, les vannes 20 et 25 sont ouvertes pour permettre l'entrée des deux ergols dans la chambre de combustion 2. L'allumeur 26 est alors activé afin d'allumer le mélange d'ergols dans la chambre de combustion 2. Dès l'allumage, l'échangeur de chaleur 10 commence à chauffer le débit de premier ergol le traversant. Les vannes de purge 18, 22 et de contournement 14, 16 peuvent alors être progressivement fermées pour permettre la montée en régime des turbopompes 9 et 12. Pendant cette montée en régime, un débit croissant du premier ergol, chauffé dans l'échangeur de chaleur 10 de manière à passer de l'état liquide à l'état gazeux, actionne les turbines 9b et 12b avant d'être injecté dans la chambre de combustion 2 à travers les injecteurs 19. Les turbines 9b et 12b, à leur tour, actionnent les pompes 9a et 12a, respectivement, augmentant ainsi les débits des deux ergols pendant cette montée en régime.

La montée en régime de la première turbopompe 9 est gouvernée par l'équation :

$$I\omega \frac{d\omega}{dt} = P_{turbine} - P_{pompe} \qquad (1)$$

dans laquelle 1 représente l'inertie de la turbopompe 9, $\omega$ représente sa vitesse de rotation, $P_{turbine}$ la puissance générée par la détente du premier ergol dans la première turbine 9b, et $P_{pompe}$ la puissance consommée par la première pompe 9a pour pomper ce premier ergol. La montée en régime atteint sa fin quand cette première turbopompe 9 atteint un équilibre dans lequel la puissance $P_{turbine}$ générée par la première turbine 9b est égale à la puissance $P_{pompe}$ consommée par la première pompe 9a.

La puissance $P_{pompe}$ consommée par la première pompe 9a peut être formulée comme :

$$P_{Pompe} = \frac{\dot{m}_{Pompe} \Delta p_{Pompe}}{\rho_{Pompe} \eta_{Pompe}} \qquad (2)$$

où $\dot{m}_{Pompe}$ désigne le débit massique total du premier ergol impulsé par la première pompe 9a, $\Delta p_{Pompe}$ la différence de pression entre l'entrée et la sortie de la première pompe 9a, $\rho_{Pompe}$ la masse volumique du premier ergol à l'état liquide traversant la première pompe 9a, et $\eta_{Pompe}$ un coefficient d'efficacité de la première pompe.

D'autre part, en approximant le comportement du premier ergol, à l'état gazeux, lors de sa détente dans la première turbine 9b, comme celui d'un gaz parfait, la puissance $P_{turbine}$ générée par la première turbine 9b peut être formulée comme :

$$P_{Turbine} = \eta_{Turbine} \dot{m}_{Turbine} c_p T \left(1 - \pi^{\frac{1-\gamma}{\gamma}}\right) \qquad (3)$$

où $\eta_{Turbine}$ désigne un coefficient d'efficacité de cette première turbine 9b, $\dot{m}_{Turbine}$ le débit massique du premier ergol propulsant la première turbine 9b par sa détente, $c_p$ la capacité thermique massique du premier ergol à l'état gazeux à pression constante, T la température absolue du premier ergol en entrée de la première turbine 9b, $\pi$ le rapport entre la pression d'entrée et la pression de sortie de la première turbine 9b, et y le rapport entre $c_p$ et la capacité thermique massique du même gaz à volume constant.

En combinant les équations (2) et (3), il est possible d'en déduire que, la puissance $P_{Pompe}$ consommée par la première pompe 9a n'est supérieure à la puissance $P_{turbine}$ générée par la première turbine 9b, permettant ainsi la montée en régime de la turbopompe 9, que quand est remplie la condition :

$$\frac{\dot{m}_{Turbine}}{\dot{m}_{Pompe}} > \frac{\Delta p_{Pompe}}{\rho_{Pompe}\eta_{Pompe}c_p T\left(1-\pi^{\frac{1-\gamma}{\gamma}}\right)} \qquad (4)$$

Si les autres paramètres sont maintenus, il est donc possible d'arrêter la montée en régime de la première turbopompe 9 en réduisant ce rapport entre le débit massique total de la première turbine 9b et le débit massique total de la première pompe 9a, ce qui peut être obtenu par délestage, en amont de la première turbine 9b, d'une partie du débit total pompé par la première pompe 9a.

Indirectement, ceci affecte aussi l'équilibre de fonctionnement de la deuxième turbopompe 12, le couplé généré par la deuxième turbine 12b dépendant du débit de premier ergol traversant cette deuxième turbine 12b. A travers le délestage d'un débit secondaire du premier ergol, il est ainsi possible de piloter le moteur-fusée 1 pour obtenir stabiliser sa poussée à des différents niveaux. Les vannes de contournement 14, 16, en régulant des débits contournant les turbines 9b, 12b, peuvent aussi contribuer au pilotage fin du régime des turbopompes 9, 12, et ainsi aussi à celui de la poussée du moteur-fusée 1.

Dans le mode de réalisation illustré sur la figure 1, le délestage peut s'effectuer à travers la ligne 17 de purge du premier ergol, par ouverture de la vanne 18 de purge du premier ergol, ce qui permet de se passer d'éléments supplémentaires pour ce pilotage du moteur-fusée.

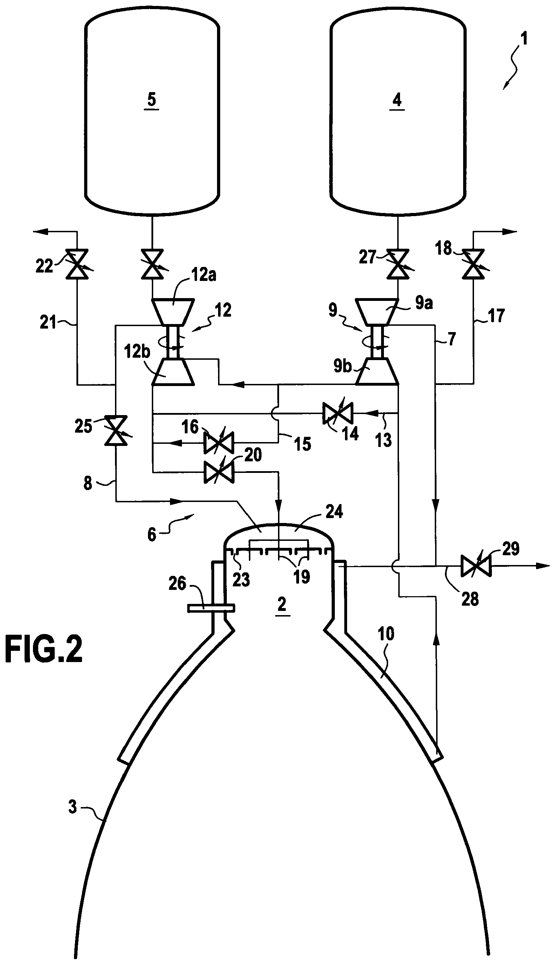

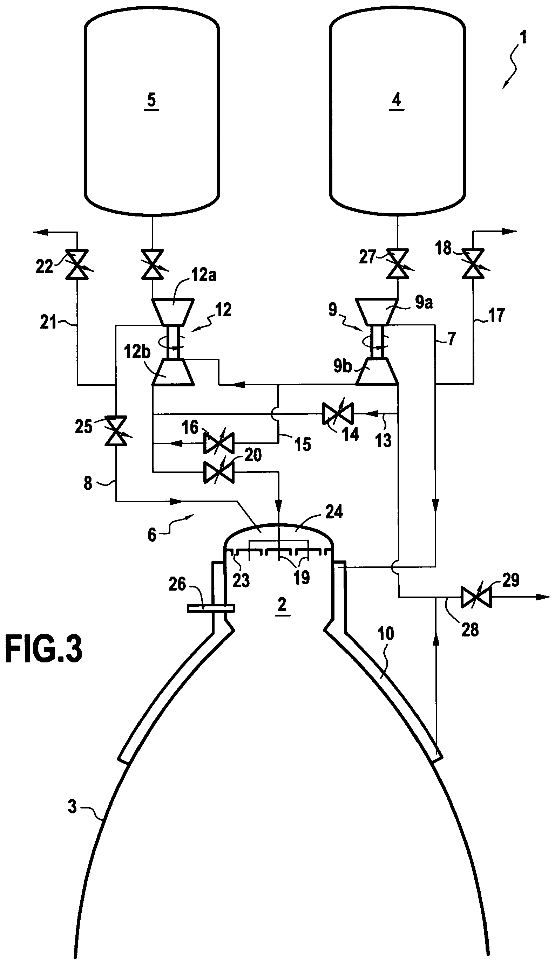

Toutefois, suivant des modes de réalisation alternatifs, ce délestage peut aussi s'effectuer à travers des lignes dédiées, situées en dérivation du premier circuit 7 en aval de la première pompe 9a, mais en amont de la première turbine 9b. Ainsi, dans les modes de réalisation illustrés sur les figures 2 et 3, dans des moteurs-fusées 1 dont tous les autres éléments sont identiques ou équivalents à ceux du mode de réalisation illustré sur la figure 1 et reçoivent en conséquence les mêmes chiffres de référence, le délestage s'effectue à travers une ligne de délestage 28, commandé par l'ouverture d'une vanne de délestage 29 installée sur cette ligne et connectée comme les autres vannes à l'unité de commande (non illustrée) pour son pilotage. Dans le mode de réalisation illustré sur la figure 2, cette ligne de délestage 28 est située en dérivation du premier circuit 7 entre la première pompe 9a et l'échangeur de chaleur 10, et le délestage du débit secondaire du premier ergol s'effectue donc en aval de la première pompe 9a, mais en amont de l'échangeur de chaleur 10. Dans le mode de mode de réalisation illustré sur la figure 3, la ligne de délestage 28 est par contre située en dérivation du premier circuit 7 entre l'échangeur de chaleur 10 et la première turbine, et le délestage du débit secondaire du premier ergol s'effectue donc en aval de l'échangeur de chaleur 10, mais encore en amont de la première turbine 9b. Dans les trois cas, le délestage permet de diminuer le rapport entre le débit massique détendu dans la première turbine 9b et le débit massique pompé par la première pompe 9a, pour ainsi arrêter la montée en régime de la turbopompe 9 et stabiliser la poussée du moteur-fusée 1 à un niveau souhaité.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En particulier, bien que dans les trois modes de réalisation illustrés les pompes des premier et deuxième ergols soient actionnées par des turbines séparées, installées en série sur le circuit d'alimentation du premier ergol, dans d'autres modes de réalisation, elles pourraient aussi, par exemple, être actionnées par une même turbine commune. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1.   Procédé d'alimentation d'au moins une chambre de combustion (2) en au moins un premier ergol, comprenant les étapes suivantes :

   pompage d'un débit principal et d'un débit secondaire dudit premier ergol par une première pompe (9a) ;
   chauffage d'au moins ledit débit principal du premier ergol dans un échangeur de chaleur (10) en aval de ladite première pompe (9a) ; et
   détente d'au moins une partie dudit débit principal du premier ergol, après ledit chauffage, dans une première turbine (9b) actionnant la première pompe 9a;
   injection dudit débit principal du premier ergol, en aval de ladite première turbine (9a) dans l'au moins une chambre de combustion ; et
   délestage dudit débit secondaire du premier ergol en aval de la première pompe (9a), mais en amont de la première turbine (9b), ledit délestage étant piloté de manière à atteindre un équilibre entre une puissance générée par la première turbine (9b) et une puissance consommée par la première pompe (9a) et ainsi arrêter une montée en régime desdites première turbine (9b) et première pompe (9a) à un régime prédéterminé inférieur à un régime nominal.

2. Procédé d'alimentation suivant la revendication 1, dans lequel ledit délestage s'effectue entre la première pompe (9a) et l'échangeur de chaleur (10).

3. Procédé d'alimentation suivant la revendication 2, dans lequel ledit délestage s'effectue à travers une vanne (18) de purge du premier ergol.

4. Procédé d'alimentation suivant la revendication 1, dans lequel ledit délestage s'effectue entre l'échangeur de chaleur (10) et la première turbine (9b).

5. Procédé d'alimentation suivant l'une quelconque des revendications précédentes, dans lequel ledit échangeur de chaleur (10) chauffe au moins ledit débit principal du premier ergol avec une chaleur générée dans ladite chambre de combustion (2).

6. Procédé d'alimentation suivant l'une quelconque des revendications précédentes, dans lequel au moins une partie dudit débit principal du premier ergol peut contourner au moins la première turbine (9b) à travers un premier passage de contournement (13), équipé d'une première vanne de contournement (14).

7. Procédé d'alimentation suivant l'une quelconque des revendications précédentes, comprenant en outre le pompage d'un débit d'un deuxième ergol par une deuxième pompe (12a) et l'injection d'au moins une partie de ce débit du deuxième ergol dans l'au moins une chambre de combustion (2).

8. Procédé d'alimentation suivant la revendication 7, comprenant en outre la détente d'au moins une partie dudit débit principal du premier ergol dans une deuxième turbine (12b) actionnant la deuxième pompe (12a).

9. Procédé d'alimentation suivant la revendication 8, dans lequel au moins une partie dudit débit principal du premier ergol peut contourner au moins la deuxième turbine (12b) à travers un deuxième passage de contournement (15), équipé d'une deuxième vanne de contournement (16).

10. Procédé d'alimentation suivant l'une quelconque des revendications 8 ou 9, dans lequel la deuxième turbine (12b) est située en aval de la première turbine (9b).

**Patentansprüche**

1. Verfahren zur Versorgung mindestens einer Brennkammer (2) mit mindestens einem ersten Treibstoff, umfassend die folgenden Schritte:

Pumpen eines Hauptflusses und eines Nebenflusses des ersten Treibstoffes durch eine erste Pumpe (9a),
Erwärmen mindestens des Hauptflusses des ersten Treibstoffes in einem Wärmetauscher (10) stromabwärts zur ersten Pumpe (9a), und
Druckmindern mindestens eines Teils des Hauptflusses des ersten Treibstoffes nach der Erwärmung in einer ersten Turbine (9b), die die erste Pumpe (9a) betätigt,
Einspritzen des Hauptflusses des ersten Treibstoffes stromabwärts zur ersten Turbine (9a) in mindestens eine Brennkammer, und
Entladen des Nebenflusses des ersten Treibstoffes stromabwärts zur ersten Pumpe (9a), aber stromaufwärts zur ersten Turbine (9b), wobei das Entladen derart gesteuert wird, dass ein Gleichgewicht zwischen einer von der ersten Turbine (9b) erzeugten Leistung und einer von der ersten Pumpe (9a) verbrauchten Leistung erzielt wird, und auf diese Weise ein Leistungsanstieg der ersten Turbine (9b) und der ersten Pumpe (9a) auf eine vorbestimmte Leistung unter einer Nennleistung angehalten wird.

2. Versorgungsverfahren nach Anspruch 1, bei dem das Entladen zwischen der ersten Pumpe (9a) und dem Wärmetauscher (10) erfolgt.

**3.** Versorgungsverfahren nach Anspruch 2, bei dem das Entladen durch ein Ablassventil (18) des ersten Treibstoffes erfolgt.

**4.** Versorgungsverfahren nach Anspruch 1, bei dem das Entladen zwischen dem Wärmetauscher (10) und der ersten Turbine (9b) erfolgt.

**5.** Versorgungsverfahren nach einem der vorhergehenden Ansprüche, bei dem der Wärmetauscher (10) mindestens den Hauptflusses des ersten Treibstoffes mit einer in der Brennkammer (2) erzeugten Wärme erwärmt.

**6.** Versorgungsverfahren nach einem der vorhergehenden Ansprüche, bei dem mindestens ein Teil des Hauptflusses des ersten Treibstoffes mindestens die erste Turbine (9b) durch einen ersten Umgehungsdurchgang (13), der mit einem ersten Umgehungsventil (14) ausgestattet ist, umgehen kann.

**7.** Versorgungsverfahren nach einem der vorhergehenden Ansprüche, ferner umfassend das Pumpen eines Flusses eines zweiten Treibstoffes durch eine zweite Pumpe (12a) und das Einspritzen mindestens eines Teils dieses Flusses des zweiten Treibstoffes in mindestens eine Brennkammer (2).

**8.** Versorgungsverfahren nach Anspruch 7, ferner umfassend das Druckmindern mindestens eines Teils des Hauptflusses des ersten Treibstoffes in einer zweiten Turbine (12b), die die zweite Pumpe (12a) betätigt.

**9.** Versorgungsverfahren nach Anspruch 8, bei dem mindestens ein Teil des Hauptflusses des ersten Treibstoffes mindestens die zweite Turbine (12b) durch einen Umgehungsdurchgang (15), der mit einem zweiten Umgehungsventil (16) ausgestattet ist, umgehen kann.

**10.** Versorgungsverfahren nach einem der Ansprüche 8 oder 9, bei dem die zweite Turbine (12b) stromabwärts zur ersten Turbine (9b) angeordnet ist.

**Claims**

**1.** A feed method for feeding at least one combustion chamber (2) with at least a first propellant, the method comprising the following steps:

pumping a main flow and a secondary flow of said first propellant by means of a first pump (9a);
heating at least said main flow of the first propellant in a heat exchanger (10) downstream from said first pump (9a);
expanding at least a portion of said main flow of the first propellant, after said heating, in a first turbine (9b) driving the first pump (9a);
injecting said main flow of the first propellant downstream from the first turbine (9a) into the at least one combustion chamber; and
off-loading said secondary flow of the first propellant downstream from the first pump (9a) but upstream from the first turbine (9b), said off-loading being controlled in such a manner as to achieve equilibrium between power generated by the first turbine (9b) and power consumed by the first pump (9a), thereby stopping the rise in speed of said first turbine (9b) and said first pump (9a) at a predetermined speed lower than a nominal speed.

**2.** A feed method according to claim 1, wherein said off-loading is performed between the first pump (9a) and the heat exchanger (10).

**3.** A feed method according to claim 2, wherein said off-loading is performed via a valve (18) for purging the first propellant.

**4.** A feed method according to claim 1, wherein said off-loading is performed between the heat exchanger (10) and the first turbine (9b).

**5.** A feed method according to any preceding claim, wherein said heat exchanger (10) heats at least said main flow of the first propellant with heat generated in said combustion chamber (2).

**6.** A feed method according to any preceding claim, wherein at least a portion of said main flow of the first propellant can bypass at least the first turbine (9b) via a first bypass passage (13) fitted with a first bypass valve (14).

7. A feed method according to any preceding claim, further including pumping a flow of a second propellant by a second pump (12a) and injecting at least a portion of this flow of the second propellant into the at least one combustion chamber (2).

8. A feed method according to claim 7, further including expanding at least a portion of said main flow of the first propellant in a second turbine (12b) driving the second pump (12a).

9. A feed method according to claim 8, wherein at least a portion of said main flow of the first propellant can bypass at least the second turbine (12b) via a second bypass passage (15) fitted with a second bypass valve (16) .

10. A feed method according to claim 8 or claim 9, wherein the second turbine (12b) is situated downstream from the first turbine (9b).

EP 2 864 620 B1

FIG.1

**FIG.2**

**FIG.3**

## RÉFÉRENCES CITÉES DANS LA DESCRIPTION

**Documents brevets cités dans la description**

- FR 180463
- FR 2815673